Europäisches Patentamt

European Patent Office

Office européen des brevets

(11) Publication number: 0 226 224
A2

# (12) EUROPEAN PATENT APPLICATION

(21) Application number: 86117758.2

(22) Date of filing: 19.12.86

(51) Int. Cl.⁴: **H04R 17/00 , G01V 1/20**

(30) Priority: 19.12.85 US 810982

(43) Date of publication of application:
24.06.87 Bulletin 87/26

(84) Designated Contracting States:
DE ES FR GB IT SE

(71) Applicant: AMERICAN TELEPHONE AND
TELEGRAPH COMPANY
550 Madison Avenue
New York, NY 10022(US)

(72) Inventor: Anderson, Ernest W.
34 Ulysses Road
Somerset New Jersey 08873(US)
Inventor: Blyler, Lee Landis, Jr.
55 Kensington Road
Basking Ridge New Jersey 07920(US)
Inventor: Hutton, Richard Sipp
9 Webster Avenue
Summit New Jersey 07901(US)
Inventor: Johnson, George Edward
87 Sagamore Drive
New Providence New Jersey 07974(US)
Inventor: Wang, Tsuey Tang
74 Oak Ridge Avenue
Summit New Jersey 07901(US)
Inventor: Zipfel, George Gustave, Jr.
53 Parkview Terrace
Summit New Jersey 07901(US)

(74) Representative: Blumbach Weser Bergen
Kramer Zwirner Hoffmann Patentanwälte
Radeckestrasse 43
D-8000 München 60(DE)

(54) Electromechanical transducer.

(57) An electromechanical transducer, as well as a method for detecting a stress, are disclosed. The inventive transducer (e.g. 10) includes a region of piezoelectric material (e.g. 20) which is directly strained by an applied, external stress, e.g., a pressure. The resulting internal stress components in the piezoelectric region are thus directly responsive to the applied stress. A high sensitivity is achieved by suppressing at least one of the stress components oriented transversely to the thickness direction of the piezoelectric region.

FIG. 5

## ELECTROMECHANICAL TRANSDUCER

### Background of the Invention

#### I. Field of the Invention

The invention pertains generally to electromechanical transducers.

#### 2. Art Background

Electromechanical transducers are devices which produce an electrical output, e.g., a voltage, in response to a mechanical input, such as an applied stress or pressure (or a mechanical output in response to an electrical input). Such transducer devices are known, are now commercially significant, and have been employed, for example, in detecting pressure signals in air and water.

Considerable efforts have been made, and are now being made, to develop electromechanical transducers which, when subjected to high ambient pressures, produce readily detectable electrical signals in response to small amplitude (relative to ambient pressure) pressure signals. For example, attempts have been made by and for the U. S. Navy to develop voltage-producing hydrophones - (electromechanical transducers which produce a voltage in response to changes in applied water pressure) useful at great ocean depths, e.g., depths as great as about 6100 meter (20,000 feet) and corresponding hydrostatic pressures of about 69,000,000 Pa (10,000 psi). Such hydrophones are intended to detect acoustic signals, e.g., small amplitude water pressure signals such as those produced by submarines. To be useful, these hydrophones should have sensitivities (the ratio of the amplitude of the voltage, $V$, to the amplitude of the corresponding pressure, $\underline{p}$) of at least -210 decibels (dB), and preferably -200 dB. (When expressed in dB, sensitivity is here taken relative to I volt at I micropascal ($1\mu Pa$), and is thus defined as $20 \log_{10}[(V/p)/(I \text{ volt}/I\mu Pa)]$.)

In developing their designs, the hydrophone artisans have long recognized the need to achieve hydrophones which not only exhibit high sensitivities, but which also exhibit a number of other important characteristics. For example, when placing a hydrophone into the ocean, the hydrophone is typically deployed with an attached cable, the hydrophone-cable structure being bent during deployment. To achieve this bending, the hydrophone should be flexible (and/or short). In addition, there are usually electrical conductors extending from the hydrophone to a remote signal amplifier and detector, e.g., an amplifier and detector located on a surface ship. From an electrical point of view, and at the frequencies of interest, these conductors constitute a distributed capacitance (and resistance). In order that the voltage received at the remote site be readily detectable, the capacitance of the hydrophone should be larger than that of the conductors, i.e., typically larger than about 100 nanofarads (nF). While this requirement can be avoided through the use of a signal amplifier co-located with the hydrophone, the hydrophone artisans have sought, instead, to achieve high capacitance hydrophones because the co-located signal amplifiers significantly increase the cost and complexity of the hydrophones. Moreover, to achieve omnidirectionality in sensing of pressure signals, the hydrophone artisans have also sought to achieve hydrophones which have small dimensions, i.e., dimensions which are less than or equal to about one-third the wavelength of the highest frequency pressure signal to be detected.

To achieve hydrophones having the above characteristics, the hydrophone artisans have recently begun to develop hydrophones which include polarized polyvinylidene fluoride (PVDF), a flexible, piezoelectric material (a material which produces a voltage in response to an applied stress) (See, e.g., James M. Powers, "Piezoelectric Polymer--An Emerging Hydrophone Technology," *IEEE*, EASCON, 1979, page 517.) In this regard, it should be noted that virgin PVDF (which is predominantly in the nonpolar, $\alpha$ crystalline phase) is not inherently piezoelectric, but must be processed to become piezoelectric. This processing initially involves stretching the PVDF (to permanently convert the $\alpha$ crystalline phase to the polar, $\beta$ phase, and to permanently align the polymer chains along the stretch direction). Then, the stretched PVDF, which is typically in sheet form, is electrically polarized by applying a DC voltage across the thickness of the sheet. (Regarding this processing see, e.g., T. T. Wang and H. von Seggern, "High Field Poling of Electroded Polyvinylidene Fluoride at Room Temperature," *Journal of Applied Physics*, 54, page 4602, 1983.) The stretch direction of the resulting, processed PVDF is generally denoted by the numeral "I", the polarization direction (the thickness direction) is generally denoted by the numeral "3", while the direction perpendicular to the "I" and "3" directions is generally denoted by the numeral "2" (see FIG. I).

The application of an arbitrarily oriented stress to a polarized (in the thickness direction) PVDF sheet results in a corresponding internal stress within the PVDF sheet, as well as the appearance of electrical charges of opposite sign at the upper and lower surfaces of the sheet. This charge separation gives rise to a voltage across the thickness - (the "3" direction) of the sheet. The magnitude of the voltage, V, corresponding to an internal stress component along the jth (j = 1,2,3) direction, $T_j$, is given by the integral over the thickness, $t$ (of the polarized PVDF sheet), of the multiple of $T_j$ and the corresponding piezoelectric stress constant, $g_{3j}$ (a material constant which determines the degree to which an internal stress component along the jth direction is converted into a voltage in the "3" direction). Thus, for example, the simultaneous presence of internal stress components $T_1$, $T_2$, and $T_3$ in a polarized PVDF sheet results in a voltage, V, given by

$$V = \int_0^t (g_{31}T_1 + g_{32}T_2 + g_{33}T_3) \, dx_3, \quad (1)$$

where $x_3$ is the coordinate variable in the "3" direction. Significantly, the $g_{31}$ and $g_{33}$ piezoelectric stress constants for uniaxially stretched and polarized PVDF are much larger (in magnitude) than the $g_{32}$ constant. Thus, the presence of a stress component in either the "1" or the "3" direction generally yields a voltage which is much larger than that resulting from a stress component in the "2" direction. Moreover, $g_{31}$ and $g_{33}$ have signs which are opposite to that of $g_{33}$ (which is also the case with most other piezoelectric materials). Consequently, the presence of internal stress components in both the "3" and, for example, "1" directions (which occurs, for example, during the application of hydrostatic pressure) results in a relatively low voltage because the voltage contribution of one stress component substantially cancels that of the other stress component.

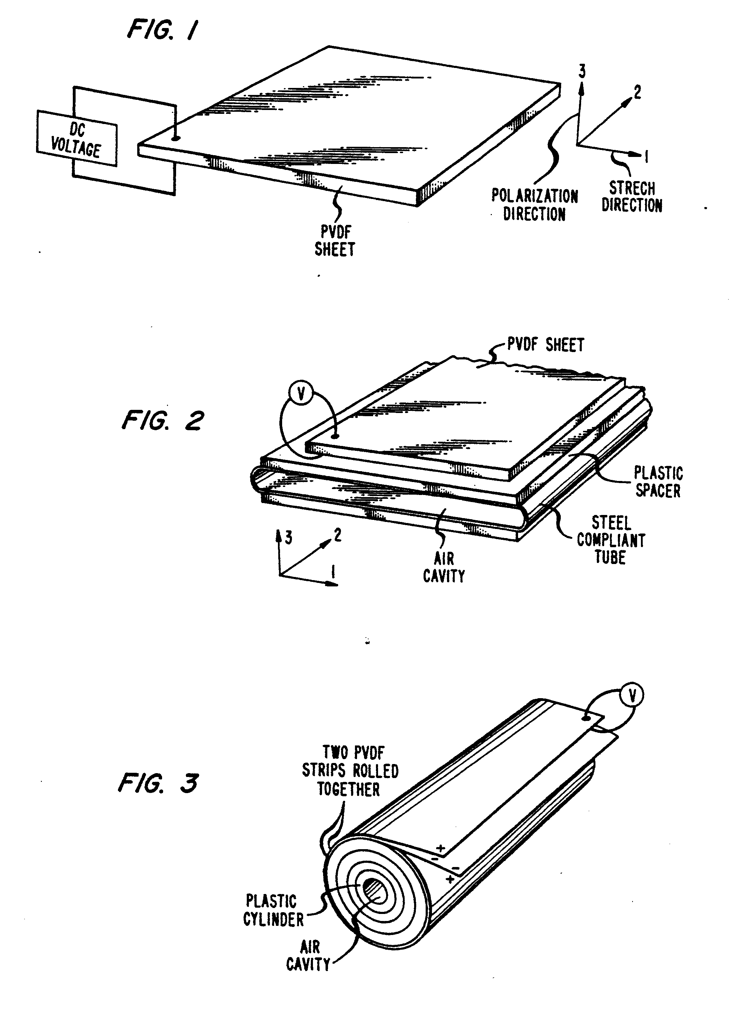

To avoid inducing stress components in both the "1" and the "3" directions, and thus to achieve high sensitivity, the hydrophone artisans have developed designs in which the PVDF is not directly strained by, and thus does not directly respond to, hydrostatic pressure. (Regarding these designs see, e.g., the journal article by James M. Powers, supra.) For example, one such prior art design, depicted in FIG. 2, includes an air-filled, compliant steel tube having a flattened, oval cross section. This design also includes a PVDF film, having its stretched "1" axis in the width direction, mounted on a plastic spacer overlying the steel tube. In operation, acoustic and static pressures cause the steel tube to bend across its width, resulting in high strain at the surface of the tube, thus inducing a strain, and a corresponding stress, in the "1" direction in the PVDF film. An output voltage results from $g_{31}$ coupling.

The characteristics, including the sensitivity, the capacitance, and the maximum operating pressure of the design depicted in FIG. 2 are listed in the article by Powers. For example, the sensitivity is listed as -200 dB (relative to I volt at I $\mu$Pa). However, the compliant steel tube collapses at only 4,139,000 Pa (600 psi), and thus this design is not useful at great depths. Moreover, the listed capacitance is only 1.6 nanofarads (nF). Consequently, even if this design were capable of operating at great ambient pressures, any voltage generated across the PVDF film could only be detected with the aid of a co-located signal amplifier.

Another a prior art hydrophone design, depicted in FIG. 3, includes an air-filled, compliant plastic tube about which is wound several layers of PVDF. Each layer has its "1" axis oriented tangentially around the tube. In addition, each winding includes two strips which are rolled up together with like-poled sides facing each other to prevent a short circuit. In operation, acoustic pressures produce an alternating change in tube diameter, creating tangential surface strains sensed by the PVDF, i.e., a voltage is produced in response to $g_{31}$ coupling.

The sensitivity listed in the Powers article for the design depicted in FIG. 3 is -213 dB, and thus this design has a sensitivity which is 13 dB smaller than, i.e., about one-fifth, that of the design of FIG. 2. In addition, the maximum operating pressure is only 12,417,000 Pa (1800 psi), and thus this design is also not useful at great depths. Moreover, the listed capacitance is only 13 nF, and thus this design also requires a co-located signal amplifier.

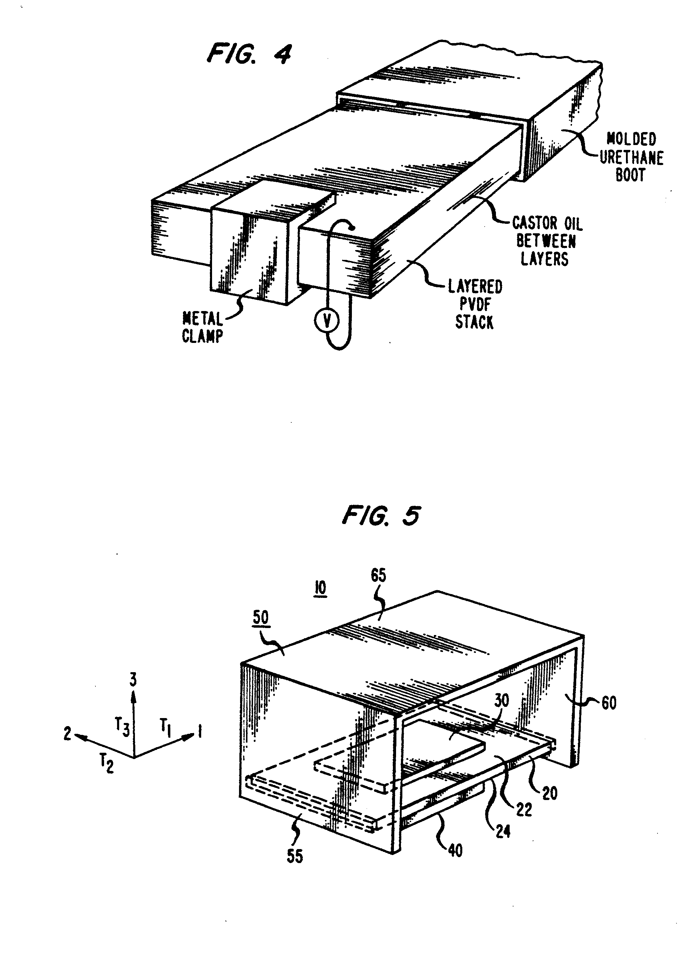

A prior art hydrophone design which does not include a compliant element, and in which the PVDF is directly strained by, and thus directly responsive to, hydrostatic pressure, is also discussed in the Powers article. This design, depicted in FIG. 4, includes a 32-layer stack of PVDF. Flexibility is achieved by using castor oil between the PVDF layers, rather than a bonding medium. In addition, the PVDF sheets are loosely held together by a polyurethane boot.

As discussed by Powers, and unlike the designs depicted in FIGS. 2 and 3, the design depicted in FIG. 4 has a pressure capability which, in principle, is unlimited. However, the sensitivity of this design is only -203 dB (3 dB smaller than, i.e., about 0.7 times, that of the design of FIG. 2). Moreover, this design has a capacitance of only 0.35 nF, the smallest capacitance of all the designs.

Thus, those engaged in the development of electromechanical transducers have sought, thus far without success, transducers which exhibit great sensitivity at high ambient pressures coupled with high capacitance, as well as mechanical flexibility and small dimensions.

## Summary of the Invention

The invention involves an electromechanical transducer which achieves high sensitivity even at very great ambient pressures, e.g., pressures greater than about 69,000,000 Pa (l0,000 psi), and exhibits high capacitance. For example, sensitivities of -l96 dB (about l.6 times that of the hydrophone of FIG. 2) and capacitances of 0.2 microfarads ($\mu$F) (about l00 times that of FIG. 2) are readily achieved. In addition, the transducer is relatively small in size and exhibits mechanical flexibility.

The inventive transducer includes a region of piezoelectric material. Significantly, this transducer has a device configuration which results in the piezoelectric region being directly strained by any external, applied stress, e.g., a pressure. Thus, the corresponding internal stress components produced within the piezoelectric region are directly responsive to the external stress. Despite previous teachings to the contrary, this device configuration achieves a high sensitivity because it also achieves at least a partial suppression of at least one of the resulting, internal stress components within the piezoelectric region aligned transversely to the polarization/thickness direction (the "3" direction). This suppression serves to substantially reduce the voltage contribution due to $g_{31}$ and/or $g_{32}$ coupling, which would otherwise tend to cancel the relatively large voltage contribution due to $g_{33}$ coupling.

## Brief Description of the Drawing

The invention is described with reference to the accompanying drawings wherein:

FIG. l depicts the coordinate system conventionally used in describing the properties of stretched and polarized PVDF;

FIGS. 2-3 depict prior art hydrophones which employ 3l piezoelectric coupling;

FIG. 4 depicts a prior art hydrostatic mode hydrophone;

FIGS. 5-8 depict four embodiments of the inventive electromechanical transducer; and

FIG. 9 includes a graph of sensitivity versus hydrostatic pressure, achieved with one embodiment of the inventive electromechanical transducer.

## Detailed Description

The invention involves an electromechanical transducer which is sensitive to small amplitude pressure signals even at very great ambient pressures, exhibits high capacitance, has relatively small dimensions, and is mechanically flexible.

As discussed above, the inventive transducer includes a region of piezoelectric material which is directly strained by an applied, external stress, e.g., a pressure. A relatively high sensitivity is achieved by at least partially suppressing at least one of the resulting stress components within the piezoelectric region leading to $g_{31}$ and/or $g_{32}$ coupling. This suppression is accomplished, in accordance with the invention, through the use of an apparatus which limits, i.e., reduces (below what would otherwise occur), the magnitude of the strain component (or components) corresponding to the internal stress component (or components) to be at least partially suppressed. Because stress is proportional to strain, a reduction in the magnitude of the latter results in a reduction in the magnitude of the former.

With reference to FIG. 5, a first embodiment of the inventive electromechanical transducer l0 includes a region, e.g., a sheet, 20 of piezoelectric material, such as polarized PVDF. This region 20 includes upper and lower surfaces 22 and 24. Either of these surfaces, e.g., the upper surface 22, is conveniently used to define a reference direction, here termed the thickness and/or "3" direction, for each point of the region 20. That is, the thickness, or "3", direction for a point on the upper surface 22 is just the normal to the surface at that point (see FIG. 5). For any other point of the region 20, the thickness direction corresponds to that of the closest point on the surface 22.

Once the "3" direction has been determined, a complete coordinate system is defined for any point of the region 20 by further specifying two mutually perpendicular directions, here denoted "l" and "2" (see FIG. 5), which are transverse, e.g., perpendicular, to the local "3" direction. In general, the "l" and "2" directions need have no physical significance. However, if the region 20 has, for example, been stretched or extruded in a particular direction, then the "l" direction is preferably aligned, as is conventional, with the stretch or extrusion direction.

In accordance with the invention, the net polarization, or at least a component of the net polarization, at the geometric center (a point) of at least one macroscopic portion of the region 20, is aligned parallel to the thickness direction (at the geometric center). (For purposes of the invention, a macroscopic portion is one having dimensions which are equal to or larger than about 1 micrometer.) As a consequence, the application of a stress, e.g., a pressure, to the region 20 results in the appearance of charges of opposite sign at the upper and lower surfaces 22 and 24, the concomitant charge separation giving rise to a voltage. These charges (and corresponding voltage) are detected by, for example, accumulating the charges on two electrodes which, at least in operation, contact the upper and lower surfaces 22 and 24. Alternatively, the electrodes are placed in close proximity to the upper and lower surfaces of the region 20, and capacitive coupling is used to detect the electrical response of the region 20. One of the two electrodes includes, for example, a region 30 - (see FIG. 5) of electrically conductive material, e.g., copper or steel, which (at least in operation) contacts, or is in close proximity to, the upper surface 22. The other electrode includes, for example, a second region of electrically conductive material 40 which contacts, or is in close proximity to, the lower surface 24.

As discussed, the region 20 is directly strained by an applied, external stress. Generally, this results in strain components ( $\epsilon_i$, i=1,2,3), and corresponding internal stress components ($T_i$, i=1,2,3), along the three directions "1", "2", "3", a response which would normally result in relatively low sensitivity. However, in accordance with the invention, a relatively high sensitivity is achieved by reducing the magnitude of $\epsilon_1$ and/or $\epsilon_2$, thus at least partially suppressing $T_1$ and/or $T_2$, in at least the macroscopic portion, described above. This is readily accomplished, for example, with an apparatus which partially or completely encircles the periphery of the region 20, and (at least in operation) contacts at least a portion of this periphery to limit strain. Such an apparatus includes, for example, a U-shaped structure 50 (see FIG. 5) having two side members 55 and 60 connected by a cross-member 65. In use, the piezoelectric region 20 is placed between the inwardly facing surfaces of the side members 55 and 60, with two opposed portions of the periphery of the region 20 abutting (at least in operation) these surfaces. This abutment is conveniently achieved, for example, by forming grooves in the inwardly facing surfaces, with the peripheral portions of the region 20 extending into abutting contact with the groove surfaces.

To produce the desired suppression, two conditions must be met. First, if, for example, $\epsilon_1$ is to be reduced, then the "1" direction of the region 20 should be aligned transversely to the inwardly facing surfaces of the side members 55 and 60. Second, in use, the relative (to each other) displacement of the inwardly facing surfaces of the side members 55 and 60 in the "1" direction should be less than, and preferably less than or equal to about one-half, the corresponding displacement of the opposed peripheral portions of the region 20 (in the absence of the U-shaped structure 50). If, for example, (1) the material of the U-shaped structure 50 is homogeneous, (2) the dimension in the "1" direction of the cross-member 65 is larger than the combined corresponding dimensions, e.g., thicknesses, of the side members 55 and 60, and (3) the cross-sectional area of the region 20 is small - (e.g., 10 percent or less) compared to the areas of the inwardly facing surfaces of the side members 55 and 60, then the relative displacement in the "1" direction of the inwardly facing surfaces is largely determined by the compressive strain in the "1" direction suffered by the cross-member 65. Under these circumstances, the second condition is satisfied provided the material of the cross-member 65 is less compliant than, and preferably less than or equal to about one-half as compliant as, that of the piezoelectric region 20 in the "1" direction. If the region 20 and apparatus 50 both consist of different, homogeneous, isotropic, elastic materials, then, under the above-specified circumstances, the second condition is satisfied provided $E_A$, the modulus of elasticity of the material of the apparatus 50, is greater than, and preferably greater than or equal to about twice, $E_R$, the modulus of elasticity of the material of the region 20.

In operation, the application of, for example, a pressure to the region 20 will generally produce a strain which includes $\epsilon_1$ (the strain component to be reduced). Because all the surfaces of the apparatus 50 are subjected to the same pressure, the apparatus 50 suffers no bending, and thus no bending strain. However, the material of the cross-member 65 will generally suffer a compressive strain in the "1" direction. If, for example, $E_A$ is greater than $E_R$, then the magnitude of this compressive strain will necessarily be smaller than the magnitude of $\epsilon_1$ in the absence of the apparatus 50. Because the peripheral portions of the region 20 abut (at least in operation) the inwardly facing surfaces of the side members 55 and 60, the magnitude of $\epsilon_1$ will necessarily be limited, i.e., reduced, to that of the compressive strain suffered by the material of the cross-member 65 Consequently, $T_1$ will be (at least partially) suppressed, and undesirable $g_{31}$ coupling reduced.

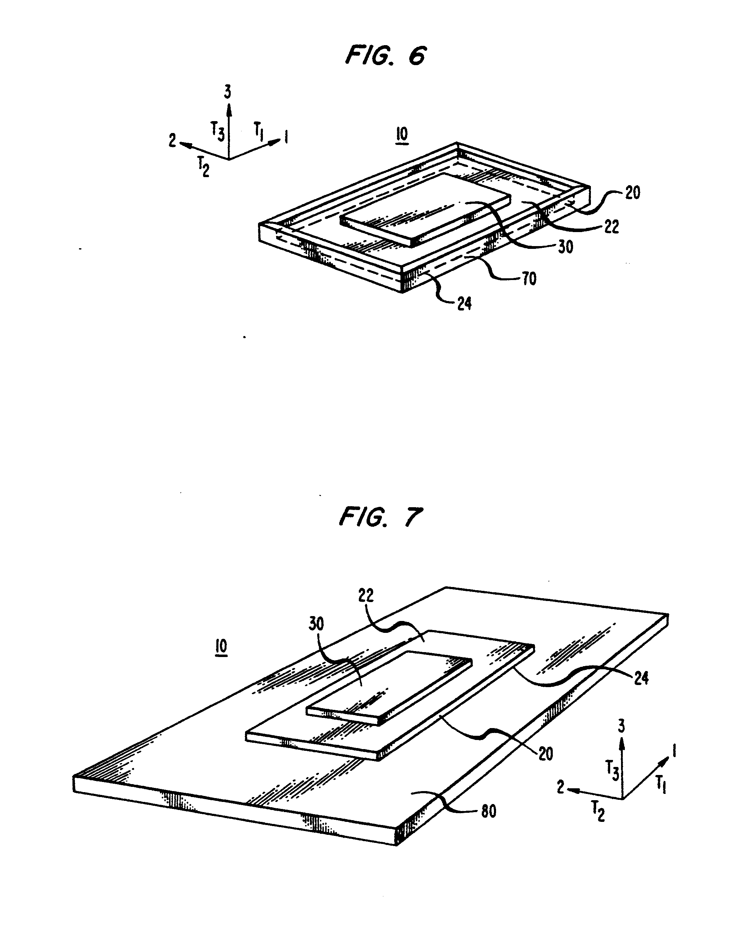

With reference to FIG. 6, a second embodiment of the inventive electromechanical transducer l0 is similar to the first embodiment, except that the U-shaped structure is replaced by a picture frame-like structure 70, which completely encircles the region 20. Although the structure 70 is depicted as being rectangular, other shapes, e.g., circular or triangular, are also useful, provided these shapes conform to the shape of the region 20. At least in operation, the periphery of the region 20 should abut the inner periphery of the structure 70. As before, this is conveniently achieved through the use of grooves (along the inner periphery of the structure 70). Provided the material of the structure 70 is less compliant than that of the region 20 in both the "l" and "2" directions, then the structure 70 will limit both $\in_1$ and $\in_2$, thus at least partially suppressing both $T_1$ and $T_2$.

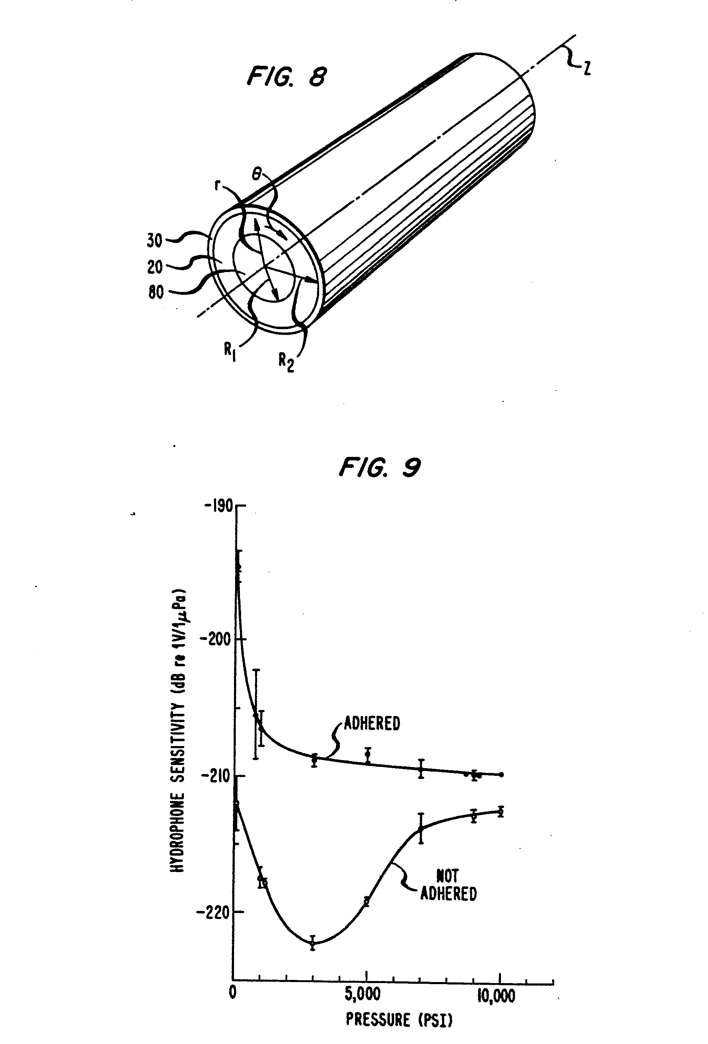

With reference to FIG. 7, a third embodiment of the inventive electromechanical transducer l0 includes a region 20 of piezoelectric material which overlies a supportive body 80. (If the body 80 is inverted, then the region 20 necessarily underlies the body 80. Thus, for purposes of the invention, the term "overlies" connotes either overlying or underlying.) While the region 20 and supporting body 80 are depicted in FIG. 7 as being substantially planar, configurations in which the supporting body 80 and/or region 20 have one or more radii of curvature are useful (see, e.g., FIG. 8).

As in the first two embodiments, the third embodiment includes two electrodes. One of the electrodes includes, for example, a region 30 of electrically conductive material which (at least in operation) contacts or is in close proximity to the upper surface 22 of the region 20. The other electrode includes, for example, a second region of electrically conductive material which is sandwiched between the region 20 and the body 80, and thus - (at least in operation) contacts or is in close proximity to the lower surface 24 of the region 20. Alternatively, and as depicted in FIG. 7, the body 80 includes electrically conductive material which contacts or is in close proximity to the lower surface of the region 20, and thus the body 80 constitutes the second electrode.

As in the first two embodiments, a stress component is at least partially suppressed in the third embodiment by reducing the magnitude of the corresponding strain component. For example, if $\in_R$ denotes the strain in the region 20 in the "l" direction in the absence of the body 80, and $\in_{RB}$ denotes the corresponding strain in the presence of the body 80, then the magnitude of the stress component in the "l" direction is reduced provided:

$$|\in_{RB}| < |\in_R|. \quad (2)$$

One technique for achieving the result expressed in Equation (2) involves the imposition of at least two conditions. First, at least in use, the region 20 should be substantially motionless relative to the body 80. If $\in_{RB/RM}$ denotes the portion of the strain in the "l" direction in the region 20 due to relative motion, e.g., slip, between the region 20 and the body 80, and $\in_{BI}$ denotes the strain in the body 80 (in the absence of the region 20) at the interface between the body 80 and region 20, then the first condition is satisfied provided:

$$|\in_{RB/RM}| < |\in_R| - |\in_{BI}|. \quad (3)$$

This first condition is readily achieved, at least in the vicinity of the interface between the region 20 and body 80, by at least partially adhering, e.g., bonding with an adhesive or glue, the region 20 to the body 80. If an electrode is sandwiched between the region 20 and body 80, then the region 20 is, for example, adhered to the electrode which, in turn, is adhered to the body 80. Alternatively, the first condition is achieved, at least in the vicinity of the region 20/body 80 interface, by roughening adjacent surfaces, thus limiting relative motion through friction. However achieved, the first condition serves to limit the (total) strain in the region 20 (in the direction of the stress component to be suppressed) to approximately the corresponding strain in the body 80.

The second condition needed to achieve the result expressed in Equation (2) is that the material of the supporting body 80 should be less compliant, and preferably less than or equal to about one-half as compliant, as that of the region 20 in the direction of the stress component (to be suppressed). If, for example, the body 80 and the region 20 both consist of (different) homogeneous, isotropic, elastic materials, then the second condition is satisfied provided the modulus of elasticity of the body 80, $E_B$, is greater than, and preferably greater than or equal to about twice, the modulus of elasticity for the region 20, $E_R$. This second condition ensures that the strain induced in the body 80 (along the direction of the stress component to be suppressed or reduced) will be less than the corresponding strain which would otherwise (in the absence of the first condition) be induced in the region 20. But, by virtue of the first condition, the strain induced in the region 20 (along the direction of the stress component to be suppressed) is roughly equal to the corresponding strain induced in the body 80. Thus, the region 20 suffers approximately the same relatively small strain as the body 80, resulting in a correspondingly small stress being induced in the region 20.

While adherence to the first and second conditions ensures that a stress component, e.g., $T_1$ or $T_2$, will be suppressed or significantly reduced in most of the region 20, these conditions do not ensure that the stress component will be suppressed or reduced at the opposite ends of the region 20. To ensure that these end conditions will have a relatively small effect on the electrical response of the region 20, the third condition which must be imposed is that the thickness of the region 20 should be less than, and preferably less than or equal to about one-fourth, the smaller of the other dimensions, e.g., length and width, of the body 20. In addition, if, for example, bonding is used to achieve the first condition, then adherence to the third condition will also ensure that the first condition is achieved through the full thickness of the region 20, and not merely in the vicinity of the region 20/body 80 interface. Thus, for example, if the stress component $T_1$ is to be suppressed or reduced, and the dimension in the "l" direction constitutes the smaller of the other (other than thickness) dimensions of the region 20, then the thickness of the region 20 should be less than, and preferably less than or equal to about one-fourth, the dimension of the region 20 in the "l" direction.

With reference to FIG. 8, a fourth and preferred embodiment of the inventive transducer l0 differs from the third embodiment only in that the supporting body 80 is cylindrical in nature, rather than planar. In cross-section, the cylindrical body 80 has any of a variety of shapes, e.g., circular, elliptical, rectangular, and triangular. However, and only for the sake of convenience, the supporting body 80 is hereafter assumed to be circular in cross-section, with a uniform cross-sectional diameter.

The preferred embodiment also includes a region of piezoelectric material 20 which at least partially encircles the surface of the body 80. The thickness of the region 20 need not be uniform. A region 30, which includes electrically conductive material, at least partially encircles the outer surface of the region 20. Preferably, the body 80 also includes electrically conductive material, and thus the region 30 and body 80 constitute the two electrodes of the preferred embodiment.

Preferably, the cylindrical body 80 is substantially free of voids (as depicted in FIG 8). The absence of voids is desirable because this largely precludes the possibility of transducer collapse at great ambient pressures, thus making the preferred embodiment useful at these pressures. The absence of voids also precludes pressure differentials across the body 80, which might otherwise lead to bending, and thus bending-induced surface strains (These are undesirable because they result in $g_{31}$ and/or $g_{32}$ coupling, and therefore reduced sensitivity.) However, the presence of one or more voids within the cylindrical body 80 is not precluded, the presence of such voids only limiting the ambient pressure at which the preferred embodiment is useful. Alternatively, the cylindrical body 80 is hollow and open-ended This feature permits application of pressure both to internal and external surfaces, also precluding transducer collapse at great ambient pressures. In addition, pressure differentials across the body 80 are precluded, which also precludes bending.

The region 20 of piezoelectric material which at least partially encircles the cylindrical body 80 is, for example, a unitary, extruded tube of piezoelectric material. Alternatively, the region 20 includes one or more sheets of piezoelectric material which are wrapped about the body 80. This piezoelectric material includes, for example, PVDF.

As shown in FIG. 8, the preferred embodiment of the inventive transducer l0 is conveniently described with reference to a radial distance, $\underline{r}$, relative to a longitudinal axis, $\underline{z}$, and an azimuthal angle, $\theta$, relative to some arbitrarily chosen radial line. The $\underline{z}$ axis is a locus of points, where each point sits at the geometrical center of a cross-section of the body 80, the cross-sectional plane being perpendicular to the $\underline{z}$ axis at that point. As used here, the radial distance, $\underline{r}$, of a point is the length of the shortest line extending from the $\underline{z}$ axis to the point.

To relate the previous discussion to the preferred embodiment of FIG. 8, it should be noted that the "3" direction at a point is parallel to the $\underline{r}$ direction at that point. However, one of the other directions, e.g., the "l" direction, can have an arbitrary orientation relative to the $\theta$ and $\underline{z}$ directions. (Once the orientation of, for example, the "l" and "3" directions are defined, then the orientation of the "2" direction automatically follows.) For example, the "l" direction is usefully aligned with either the $\theta$ direction, or the $\underline{z}$ direction, or some alignment intermediate these directions. Thus, and if, for example, the "l" direction corresponds to the stretch direction of the piezoelectric material, then the stretch direction is usefully aligned with either the $\underline{z}$ direction, or the $\theta$ direction, or some alignment between these directions.

A high sensitivity is achieved with the preferred embodiment by suppressing, or significantly reducing, the stress component along the $\underline{z}$ direction, $T_z$, and/or the stress component along the $\theta$ direction, $T_\theta$. Such suppression or reduction is achieved by applying the three conditions listed above (in reference to the third embodiment). For example, if $T_z$ and/or $T_\theta$ is to be suppressed, then the first condition is satisfied, i.e., the region 20 is made substantially motionless relative to the body 80 along the $\underline{z}$ and/or $\theta$ direction, by, for example, at least partially adhering, e.g., bonding with an adhesive or glue, the region 20 to the body 80. The useful adhesives depend upon the compositions of the body 80 and the region 20. For example, if the body 80 includes copper (an electrical conductor) and the region 20 includes PVDF, then useful adhesives include a UV curable acrylate resin sold under the tradename DeSoto 3471-I-I2 by the DeSoto Corporation of Des Plaines, Illinois.

The second condition (for suppressing $T_z$ and/or $T_\theta$) requires that the body 80 be less compliant than the region 20 in the $\underline{z}$ and/or $\theta$ direction. This is readily achieved by an appropriate choice of materials. For example, if the region 20 is of PVDF, then the second condition is readily satisfied provided the body 80 is, for example, of copper or of steel.

The third condition is satisfied provided the thickness of the region 20 is less than, and preferably less than or equal to about one-fourth, the smaller of the remaining dimensions of the region 20. Thus, for example, if the length of the region 20 is smaller than the inner circumference of the region 20, $2\pi R_1$, ($R_1$ being the radius of the outer surface of the cylindrical body 80 and thus the radius of the inner surface of the region 20), then the thickness should be less than, and preferably less than or equal to about one-fourth, the length of the region 20. On the other hand, if the inner circumference of the region 20 is smaller than its length, then the thickness should be less than, and preferably less than or equal to about one-fourth, $2\pi R_1$.

Significantly, it has been found that both the sensitivity and the capacitance of the preferred embodiment are largely determined by the dimensions of this embodiment, and that these dimensions are readily chosen to achieve both a high sensitivity and a high capacitance. For example, if $R_2$ denotes the average radial distance of the outer surface of the region 20 from the $\underline{z}$ axis, then the sensitivity of the preferred embodiment is largely determined by the value of $R_2-R_1$, the average thickness of the region 20. That is, increasing the average thickness (e.g., increasing $R_2$ while keeping $R_1$ fixed) produces an increase in sensitivity. However, and for a fixed average thickness (a fixed value of $R_2-R_1$), varying $R_1$ or $R_2$ has little effect on sensitivity. On the other hand, an increase in average thickness produces a decrease in capacitance per unit length. But, for a fixed average thickness, an increase in $R_1$ results in a significant increase in capacitance per unit length. Thus, and in accordance with the invention, both a high sensitivity and a high capacitance are achieved by first choosing (from amongst control samples having different thicknesses) the average thickness which yields the desired sensitivity. Then, while keeping average thickness (and thus sensitivity) constant, $R_1$ (of control samples) is varied until the desired capacitance per unit length is realized.

Using the above optimization procedure and for the case where the preferred embodiment of the transducer 10 has a cylindrical body 80 of copper and a tube 20 of PVDF, it has been found that the average thickness of the tube 20 preferably ranges from about $1.27 \times 10^{-2}$cm (0.005 inches) to about 0.635 cm (0.25 inches). Average thicknesses less than about $1.27 \times 10^{-2}$cm (0.005 inches) are undesirable because the resulting sensitivities are undesirably low. On the other hand, average thicknesses greater than about 0.635 cm (0.25 inches) are undesirable because the resulting capacitance per unit length is undesirably low. In addition, $R_1$ ranges from about $3.81 \times 10^{-2}$cm (0.015 inches) to about 0.635 cm (0.025 inches). Values of $R_1$ less than about $3.81 \times 10^{-2}$cm (0.015 inches) are undesirable because the cylindrical body 80 tends to buckle when the tube 20 is, for example, drawn onto the body 80. Values of $R_1$ greater than about 0.635 cm (0.25 inches) are undesirable because the resulting structure is undesirably stiff and inflexible, and thus difficult to wind about a mandrel or reel (typically used for deployment).

In all of the above embodiments, the apparatus or supporting body used to limit the strain of the piezoelectric region 20 is not subject to bending. The absence of bending is not, however, an essential feature of the invention. That is, an apparatus or supporting body subject to bending is useful provided the bending-induced strain in the piezoelectric region 20 leads to a strain component (in the direction of the internal stress component to be suppressed) which is smaller than that which would occur in the absence of the apparatus or supporting body.

The present invention not only encompasses electromechanical transducers, but also encompasses a method for detecting a stress, e.g., a pressure. In accordance with this method, the inventive electromechanical transducer is subjected to a stress (to be detected), to produce a corresponding electrical response, e.g., a voltage. At least a portion of this electrical response is then communicated (transmitted) to a position distant from the transducer, where the electrical response is detected.

Example

An embodiment of the inventive electromechanical transducer, of the type depicted in FIG. 8, was formed by initially applying a UV curable resin, sold under the tradename DeSoto 3471-I-I2 by the

DeSoto Corporation of Des Plaines, Illinois, to the surface of a copper-clad steel wire. The wire, which later functioned as one of the electrodes of the transducer, had a diameter of 6.35 $\times$ $10^{-2}$cm (0.025 inches) and a length of 30.5 meters. The thickness of the applied UV curable resin was about 2.54 $\times$ $10^{-3}$cm (0.001 inches).

A tube of PVDF was continuously extruded about the resin-covered wire at a speed of about 0.67 m (2.2 feet) per minute. The inner and outer diameters of the PVDF tube were, respectively, 0.13 cm (0.05 inches) and 0.28 cm (0.11 inches). The PVDF-covered wire was then run through a water trough to cool, and thus solidify, the PVDF.

The extruded and solidified PVDF tube (encircling the copper-clad steel wire) was heated within a furnace to 70 degrees Centigrade to soften the PVDF (in preparation for drawing). The PVDF tube was then drawn (stretched) to 4-5 times its original length to shrink the tube onto the wire and to convert the PVDF from the nonpolar $\alpha$ crystalline phase to the polar $\beta$ crystalline phase. To adhere the PVDF tube to the wire, the PVDF tube was subjected to penetrating UV radiation (of wavelength ranging from about 300 to about 405 nanometers) to cure the underlying resin. This curing process resulted in a firm bond between the PVDF and the copper-clad steel wire, substantially precluding relative motion between the PVDF and the wire. (As discussed above, the avoidance of relative motion is essential to achieving high sensitivity.)

The PVDF tube was polarized in the thickness direction by heating it to 90 degrees Centigrade and continuously pulling the PVDF-covered wire, at a speed of about 0.09 m (0.3 feet) per minute, through a circular corona discharge. The applied voltage across the thickness of the PVDF was 20 kilovolts.

The second electrode of the electromechanical transducer was formed by painting the outer surface of the PVDF tube with a silver-containing urethane sold under the tradename 370 WEC by the Dynaloy Corporation of Hanover, New Jersey. The thickness of the urethane was about 1.27 $\times$ $10^{-2}$cm (0.005 inches). The resulting, PVDF-covered steel wire was then wrapped about a cylindrical brass tube having an outer diameter of 5.1 cm (2 inches) and a length of 0.3 meters. The ends of the PVDF-covered wire were secured to the opposite ends of the brass tube with plastic twists.

The capacitance per unit length of the inventive transducer was measured with a function generator (Model No. 166 sold by the Wavetek Corporation of San Diego, California) and an electrometer (Model No. 616 sold by the Keithly Instruments Corporation of Cleveland, Ohio) to be 9.4 picofarads per centimeter. (Thus, a total capacitance of 0.2 microfarads is readily achieved by employing a PVDF-covered wire of length equal to 213 meters (which is practical).)

The inventive transducer and a lead-titanate reference hydrophone (including a piezoelectric element, Model No. EC 97 sold by the Western Division of Edo Corporation of Salt Lake City, Utah) having a calibrated sensitivity of -197.4 dB - (relative to 1 volt at 1 $\mu$Pa) were placed in a water-filled pressure chamber. The ambient hydrostatic pressure within the chamber was then incrementally increased from 101,325 Pa (14.7 psi) - (atmospheric pressure) to 69,000,000 Pa (10,000 psi). At the end of each incremental pressure increase, the chamber was struck with a metal hammer to generate a hydrostatic pressure pulse within the chamber, and the corresponding voltages produced by the inventive transducer and the reference hydrophone were recorded to determine the sensitivity of the inventive transducer. The results are presented in FIG. 9 as a graph of sensitivity - (expressed in dB) versus ambient hydrostatic pressure, labeled "Adhered".

A second electromechanical transducer was fabricated, as described above, except that there was no resin used to adhere the PVDF tube to the copper-clad steel wire. The sensitivity of this second transducer was also measured, using the procedure described above. These measurements are also presented in FIG. 9 as the graph labeled "Not Adhered".

As is evident from the graphs in FIG. 9, the sensitivity of the inventive transducer (the one with the PVDF adhered to the steel wire) is significantly better than that of the second transducer, over a wide range of ambient pressures.

## Claims

1. An electromechanical transducer device, comprising:
a first region of material, including piezoelectric material, said first region including at least a first surface relative to which a thickness direction is defined for each point of said first region, a net polarization, or net polarization component, at the center of at least one macroscopic portion of said first region being parallel to the thickness direction at said center, Characterized In That
said device further comprises first means for at least partially suppressing at least one stress component in at least said macroscopic portion induced in response to an external stress applied to said first region, said stress component being aligned transversely to said thickness direction at said center.

2. The device according to claim I, CHARACTERIZED IN THAT said first means includes second means for reducing the magnitude of a strain component corresponding to said stress component.

3. The device according to claim 2, CHARACTERIZED IN THAT said second means includes an apparatus which at least partially encircles and, at least in operation, contacts at least a portion of, the periphery of said first region.

4. The device according to claim 3, CHARACTERIZED IN THAT said apparatus includes a U-shaped structure or a picture frame structure.

5. The device according to claim 2, CHARACTERIZED IN THAT said second means includes a body, said first region overlying said body, the material of said body being less compliant than that of said first region in the direction of said strain component, and said first region being substantially motionless relative to said body in the direction of said strain component.

6. The device according to claim 5, CHRACTERIZED IN THAT said first region has a thickness which is less than the smaller of the other dimensions of said first region.

7. The device according to claim I or 5, CHARACTERIZED IN THAT a second region of material, including electrically conductive material, overlies said first region.

8. The device according to claim 7, CHARACTERIZED IN THAT a third region of material, including electrically conductive material, underlies said first region or is positioned between said first region and said body.

9. The device according to claim 8, CHARACTERIZED IN THAT said body includes electrically conductive material.

I0. The device according to claim 9, CHARACTERIZED IN THAT the electrically conductive material contained in said body includes copper or steel.

II.The device according to claim 5, CHARACTERIZED IN THAT said body is a cylinder, and said first region at least partially encircles said cylinder.

I2.The device according to claim II, CHARACTERIZED IN THAT said first region is a tube having inner and outer surfaces, the average radial distances of said inner and outer surfaces from a longitudinal axis of said cylinder being denoted by $R_1$ and $R_2$, and thus the average thickness of said tube being $R_2$-$R_1$.

I3. The device according to claim I2, CHARACTERIZED IN THAT said average thickness, $R_2$-$R_1$, ranges from about $1.27 \times 10^{-2}$ cm (0.005 inches) to about 0.635 cm - (0.25 inches).

I4. The device according to claim I2, CHRACTERIZED IN THAT $R_1$ ranges from about $3.8 \times 10^{-2}$cm (0.0I5 inches) to about 0.635 cm (0.25 inches).

I5. The device according to any one of the preceding claims I-I4, CHARACTERIZED IN THAT said piezoelectric material includes polyvinylidene fluoride.

I6. A method for detecting a stress, comprising the steps of:
subjecting an electromechanical transducer to said stress, said transducer producing an electrical response to said stress;
communicating at least a portion of said electrical response to a position spaced from said transducer; and
detecting said portion, Characterized In That said transducer comprises a region of material, including piezoelectric material, and said subjecting step includes the step of at least partially suppressing at least one stress component in at least a macroscopic portion of said region induced in response to said stress.

FIG. 1

DC VOLTAGE

PVDF SHEET

3

2

1

POLARIZATION DIRECTION

STRECH DIRECTION

FIG. 2

PVDF SHEET

V

PLASTIC SPACER

STEEL COMPLIANT TUBE

AIR CAVITY

3

2

1

FIG. 3

TWO PVDF STRIPS ROLLED TOGETHER

V

+

+

PLASTIC CYLINDER

AIR CAVITY

FIG. 4

MOLDED
URETHANE
BOOT

CASTOR OIL
BETWEEN
LAYERS

LAYERED
PVDF
STACK

METAL
CLAMP

V

FIG. 5

## FIG. 6

## FIG. 7

FIG. 8

FIG. 9